# EUROPEAN PATENT APPLICATION

(11) **EP 4 579 988 A1**
(43) Date of publication of application: **02.07.2025**
(21) Application number: 23897424.0
(22) Date of filing: 09.11.2023
(51) Int. Cl.: H02J 7/00, B60L 3/00, B60L 58/20

(54) **POWER SUPPLY DEVICE**

(30) Priority: 30.11.2022 JP 2022191720
(71) Applicant: AISIN CORPORATION, Kariya-shi, Aichi 448-8650 (JP)
(72) Inventor: MUTSUURA, Keita, Kariya-shi, Aichi 448-8650 (JP); KAMATA, Takahide, Kariya-shi, Aichi 448-8650 (JP)
(74) Representative: Kramer Barske Schmidtchen Patentanwälte PartG mbB
(86) International application number: PCT/JP2023/040376
(87) International publication number: WO 2024/116771

(57) **Abstract**

A power supply device mounted on a vehicle includes a power supply module, and the power supply module includes an inverter that converts AC power into DC power and outputs the DC power, a converter including a first conversion unit that converts the DC power from the inverter into DC power chargeable a first battery, and a second conversion unit that converts the DC power into DC power chargeable a second battery, and a control unit that drives the inverter and drives the converter. The power supply module includes a high-voltage system component including the inverter and the first conversion unit and a low-voltage system component including the second conversion unit based on a voltage value of a voltage to be applied, and the low-voltage system component is provided on an outer edge portion side of the vehicle in plan view with respect to the high-voltage system component.

## Description

### TECHNICAL FIELD

The present invention relates to a power supply device mounted on a vehicle.

### BACKGROUND ART

Conventionally, vehicles (for example, hybrid vehicles and electric vehicles) traveling with electric energy have been used. Such a vehicle includes a power supply device including a power supply module having an inverter and a converter. As a technique related to such a power supply device, for example, there is a technique described in Patent Literature 1 whose source is described below.

Patent Literature 1 describes a power supply device configured to charge a battery with electric power supplied from an external power supply and supply the electric power from the battery to a load and a motor. In this power supply device, the space in the housing is divided into an upper first space and a lower second space by a partition member. A functional unit to which a predetermined first voltage is applied in the power supply device is provided in the first space, and a functional unit to which a second voltage lower than the first voltage is applied in the power supply device is provided in the second space.

### CITATION LIST

### PATENT LITERATURE

Patent Literature 1: JP 2020-61892 A

### SUMMARY OF INVENTION

### TECHNICAL PROBLEMS

As described above, in the power supply device described in Patent Literature 1, a component with a high applied voltage (hereinafter, referred to as "high-voltage system component") is provided on the upper side in the housing, and a component with a low applied voltage (hereinafter referred to as "low-voltage system component") is provided on the lower side in the housing. For this reason, in a case where a vehicle on which the power supply device is mounted collides, the high-voltage system component may be exposed to the outside of the vehicle.

Therefore, there is a demand for a power supply device in which a high-voltage system component is not exposed to the outside of a vehicle even if the vehicle collides.

### SOLUTIONS TO PROBLEMS

A characteristic configuration of a power supply device according to the present invention is a power supply device mounted on a vehicle, the power supply device including a power supply module, the power supply module includes an inverter that converts AC power into DC power and outputs the DC power, a converter including a first conversion unit that converts the DC power from the inverter into DC power composed of a DC voltage having a first voltage value chargeable a first battery, and a second conversion unit that converts the DC power into DC power composed of a DC voltage having a second voltage value lower than the first voltage value chargeable a second battery different from the first battery, and a control unit that drives the inverter and drives the converter, and the power supply module includes a high-voltage system component including the inverter and the first conversion unit and a low-voltage system component including the second conversion unit based on a voltage value of a voltage to be applied, and the low-voltage system component is provided on an outer edge portion side of the vehicle in plan view with respect to the high-voltage system component.

For example, in a case where the vehicle collides, the outer edge portion side of the vehicle is often more damaged than the central portion side of the vehicle. In addition, when the functional units of the power supply module are classified into the high-voltage system component and the low-voltage system component, the high-voltage system component has a higher voltage value of the applied voltage than the low-voltage system component. Therefore, according to the above characteristic configuration, the low-voltage system component can be disposed on the outer edge portion side of the vehicle and the high-voltage system component can be disposed on the central portion side of the vehicle, and thus even if the vehicle collides, the high-voltage system component having a high voltage value of the applied voltage can be prevented from being exposed to the outside of the vehicle. Furthermore, since the low-voltage system component and the high-voltage system component are arranged separately from each other, the influence of noise from one of the high-voltage system component and the low-voltage system component to the other can be reduced.

### BRIEF DESCRIPTION OF DRAWINGS

FIG. 1 is a block diagram illustrating a configuration of a power supply device.
FIG. 2 is a diagram illustrating a configuration of a collision detection unit.
FIG. 3 is an exploded perspective view illustrating the configuration of the power supply device.
FIG. 4 is a diagram illustrating a mounting mode of a power supply module on a vehicle.
FIG. 5 is a diagram illustrating a mounting mode of the power supply module on the vehicle.
FIG. 6 is a diagram illustrating a mounting mode of the power supply module on the vehicle.
FIG. 7 is a diagram illustrating a mounting mode of the power supply module on the vehicle.
FIG. 8 is a diagram illustrating a mounting mode of the power supply module on the vehicle.
FIG. 9 is a diagram illustrating a mounting mode of the power supply module on the vehicle.
FIG. 10 is a diagram illustrating a mounting mode of the power supply module on the vehicle.
FIG. 11 is a diagram illustrating a mounting mode of the power supply module on the vehicle.

### DESCRIPTION OF EMBODIMENTS

A power supply device according to the present invention is mounted on a vehicle. Hereinafter, a power supply device 1 of the present embodiment will be described.

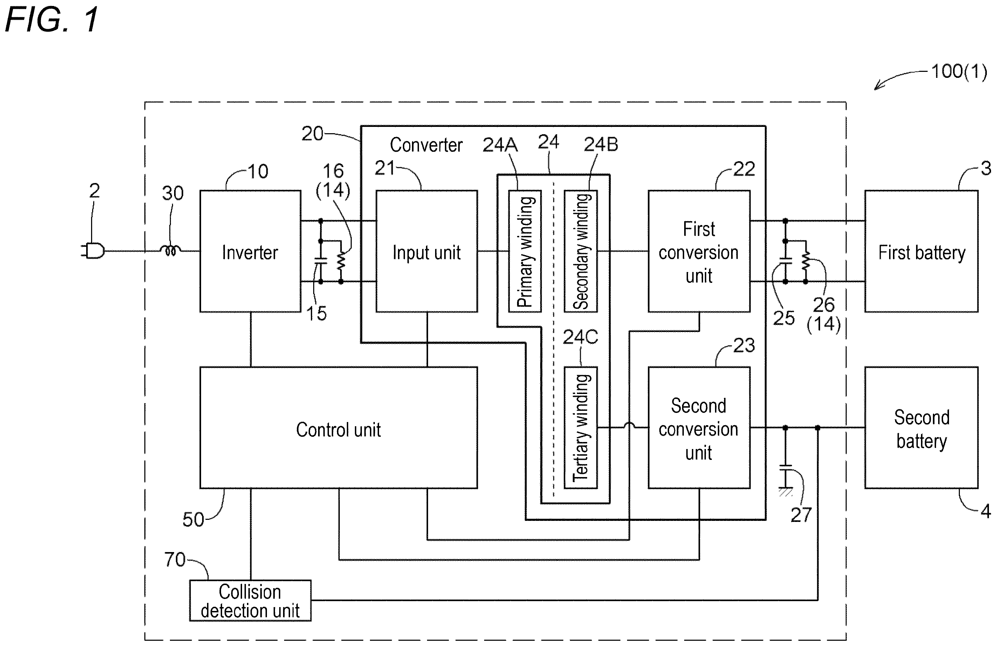

FIG. 1 is a block diagram schematically illustrating a configuration of the power supply device 1. As illustrated in FIG. 1, the power supply device 1 includes a power supply module 100 including an inverter 10, a discharge unit 14, a first capacitor 15, a converter 20, a second capacitor 25, a reactor coil 30, a control unit 50, and a collision detection unit 70. Each functional unit is constructed by hardware, software, or both with a CPU as a core member in order to perform the processing related to the output of DC power described above.

The inverter 10 converts AC power into DC power and outputs the DC power. The AC power refers to electric power composed of an AC voltage whose voltage value oscillates at a predetermined cycle. Specifically, the AC voltage corresponds to an AC voltage of, for example, 200 V (effective value) oscillating at a commercial frequency (for example, 50 Hz or 60 Hz) and extracted from a commercial power supply supplied in a single-phase three-wire system. The DC power refers to electric power composed of a DC voltage with a constant voltage value (excluding a ripple voltage) with respect to a reference voltage. In the present embodiment, AC power from the commercial power supply is supplied to the inverter 10. The inverter 10 converts the AC power composed of such an AC voltage into DC power including a DC voltage. The inverter 10 outputs the DC power generated by conversion from AC power to the converter 20 to be described later.

The first capacitor 15 is provided between the output terminals of the inverter 10. Between the output terminals of the inverter 10 is between a positive electrode terminal and a negative electrode terminal from which the DC power generated by the inverter 10 is output. Therefore, as illustrated in FIG. 1, the first capacitor 15 is provided between the positive electrode terminal and the negative electrode terminal of the inverter 10. The first capacitor 15 smooths the DC voltage converted by the inverter 10.

The reactor coil 30 is provided between the inverter 10 and a supply unit 2 that supplies AC power to the inverter 10.

The converter 20 includes an input unit 21, a first conversion unit 22, a second conversion unit 23, and a transformer 24. In the present embodiment, the transformer 24 is an isolation multi-port transformer including a primary winding 24A, a secondary winding 24B, and a tertiary winding 24C.

The input unit 21 causes DC power from the inverter 10 to oscillate at a predetermined cycle, and inputs the DC power to the primary winding 24A. The DC power from the inverter 10 is DC power output from the inverter 10. By the input unit 21 causes the DC power from the inverter 10 to oscillate at a predetermined cycle, AC power oscillating at a predetermined cycle is input to the primary winding 24A.

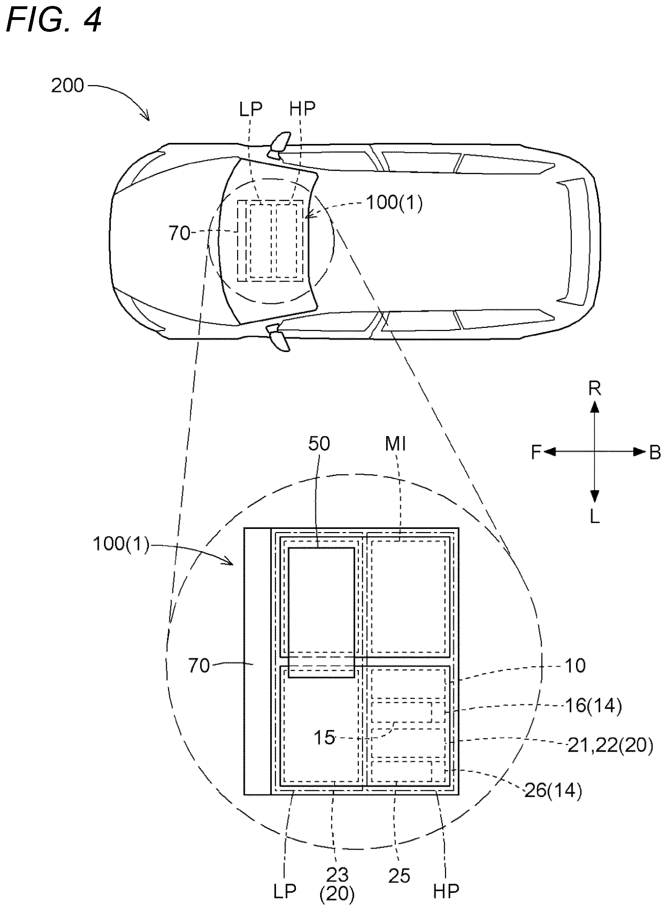

A current (alternating current) corresponding to the turn ratio of the primary winding 24A and the secondary winding 24B flows through the secondary winding 24B, and a voltage (alternating voltage) corresponding to the turn ratio of the primary winding 24A and the secondary winding 24B is generated. The first conversion unit 22 converts AC power generated in the secondary winding 24B into DC power composed of a DC voltage having a first voltage value capable of charging a first battery 3. The first battery 3 is a battery mounted on a vehicle 200 (see FIG. 4) charged by the power supply device 1, and is charged on the basis of the DC power output from the first conversion unit 22. The first battery 3 is charged with a DC voltage having a predetermined voltage value, and the voltage value of the DC voltage constituting the DC power output from the inverter 10 is about the voltage value (200 V) of the AC voltage input to the inverter 10. The first conversion unit 22 boosts the voltage value of the DC voltage output from inverter 10 to a DC voltage having a voltage value (corresponds to "first voltage value", for example, several hundred V) necessary for charging the first battery 3.

The second capacitor 25 is provided between the output terminals of the first conversion unit 22. Between the output terminals of the first conversion unit 22 is between a positive electrode terminal and a negative electrode terminal from which the DC power generated by the first conversion unit 22 is output. Therefore, as illustrated in FIG. 1, the second capacitor 25 is provided between the positive electrode terminal and the negative electrode terminal of the first conversion unit 22. The second capacitor 25 smooths the DC voltage constituting the AC power converted by the first conversion unit 22.

A current (alternating current) corresponding to the turn ratio of the primary winding 24A and the tertiary winding 24C flows through the tertiary winding 24C, and a voltage (alternating voltage) corresponding to the turn ratio of the primary winding 24A and the tertiary winding 24C is generated. The second conversion unit 23 converts AC power generated in the tertiary winding 24C into DC power composed of a DC voltage having a second voltage value (for example, 12 V) lower than the first voltage value capable of charging a second battery 4 different from the first battery 3. The second battery 4 is a battery mounted on the vehicle 200 charged by the power supply device 1, and is charged on the basis of the DC power output from the second conversion unit 23. The second battery 4 is charged with a DC voltage having a predetermined voltage value, and the voltage value of the DC voltage constituting the DC power output from the inverter 10 is about the voltage value (200 V) of the AC voltage input to the inverter 10. The first conversion unit 22 steps down the voltage value of the DC voltage output from inverter 10 to a DC voltage having a voltage value (corresponds to "second voltage value", for example, 12 V) necessary for charging the second battery 4.

A third capacitor 27 is provided between the output terminals of the second conversion unit 23. For example, the second conversion unit 23 can be configured to convert AC power generated in the tertiary winding 24C into DC power composed of the DC voltage having the second voltage value by synchronous rectification.

The control unit 50 drives each of a plurality of switching elements (not illustrated) provided in the inverter 10. As a result, as described above, the inverter 10 can convert AC power supplied from the supply unit 2 into DC power on the basis of the driving of the switching elements.

Furthermore, the control unit 50 drives each of a plurality of switching elements (not illustrated) provided in the converter 20. As a result, the DC power from the inverter 10 oscillates to be input to the primary winding 24A, and the AC power corresponding to the turn ratio of the primary winding 24A and the secondary winding 24B can be generated in the secondary winding 24B.

Moreover, the control unit 50 drives each of a plurality of switching elements (not illustrated) provided in the first conversion unit 22. As a result, the AC voltage generated in the secondary winding 24B is converted into a DC voltage. The first battery 3 is charged with the DC voltage.

Furthermore, the control unit 50 drives each of a plurality of switching elements (not illustrated) provided in the second conversion unit 23. As a result, the AC voltage generated in the tertiary winding 24C is converted into a DC voltage. The second battery 4 is charged with the DC voltage.

Here, when the power supply device 1 is driven, the first capacitor 15 and the second capacitor 25 are charged as described above. The power supply module 100 includes the discharge unit 14 that discharges the first capacitor 15 and the second capacitor 25. In the present embodiment, the discharge unit 14 includes a resistor (so-called "discharge resistor"). A resistor 16 is provided in parallel with the first capacitor 15 as a discharge resistor that discharges the first capacitor 15, and a resistor 26 is provided in parallel with the second capacitor 25 as a discharge resistor that discharges the second capacitor 25. In the present embodiment, the resistor 16 and the first capacitor 15 are provided in parallel to each other, and the resistor 26 and the second capacitor 25 are provided in parallel to each other. Therefore, when the power supply to the first capacitor 15 is stopped, the first capacitor 15 (the charges of the first capacitor 15) is automatically discharged by the resistor 16, and when the power supply to the second capacitor 25 is stopped, the second capacitor 25 (the charges of the second capacitor 25) is automatically discharged by the resistor 26.

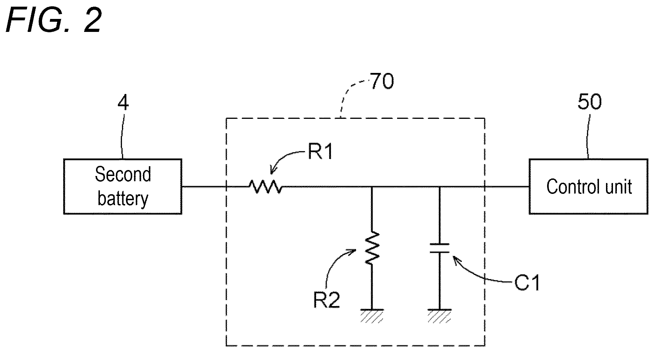

The collision detection unit 70 detects a collision of the vehicle 200. FIG. 2 illustrates a detection circuit constituting the collision detection unit 70 of the present embodiment. The collision detection unit 70 includes a plurality of resistors R1 and R2 connected in series between a first potential to which the output voltage of the second battery 4 is applied and a second potential lower than the first potential, and detects a collision on the basis of voltage values divided by the plurality of resistors R1 and R2. The first potential to which the output voltage of the second battery 4 is applied means the same potential as the output voltage of the second battery 4. In the present embodiment, the output terminal of the second battery 4 corresponds to such a portion of the first potential. The second potential lower than the first potential refers to a voltage value lower than the voltage value of the output voltage of the second battery 4, and corresponds to, for example, the ground potential. Therefore, in the present embodiment, the resistor R1 and the resistor R2 connected in series are provided between the output terminal of the second battery 4 and the ground potential.

In the present embodiment, the collision detection unit 70 includes the resistor R1, the resistor R2, and a capacitor C1. In the resistor R1, one terminal is connected to the output terminal of the second battery 4, and the other terminal is connected to the control unit 50. In the resistor R2, one terminal is connected to the other terminal of the resistor R1, and the other terminal is grounded. As a result, the output voltage of the second battery 4 is divided by the resistor R1 and the resistor R2 between the output voltage and the ground potential.

In addition, a node at which the resistor R1 and the resistor R2 are connected to each other is connected to the control unit 50. The voltage value divided by the resistor R1 and the resistor R2 is thus input to the control unit 50. Furthermore, the capacitor C1 is provided in parallel with the resistor R2 as a filter that smoothes a divided voltage.

For example, in a case where disconnection of a connection line connecting the second battery 4 and the control unit 50, missing or short-circuit of the resistor R1, missing or short-circuit of the resistor R2, or the like occurs due to the collision of the vehicle 200, the voltage value input to the control unit 50 is different from an expected value (a value obtained by dividing the potential difference between the output voltage of the second battery 4 and the ground potential by the resistor R1 and the resistor R2), so that the control unit 50 can detect the collision of the vehicle 200.

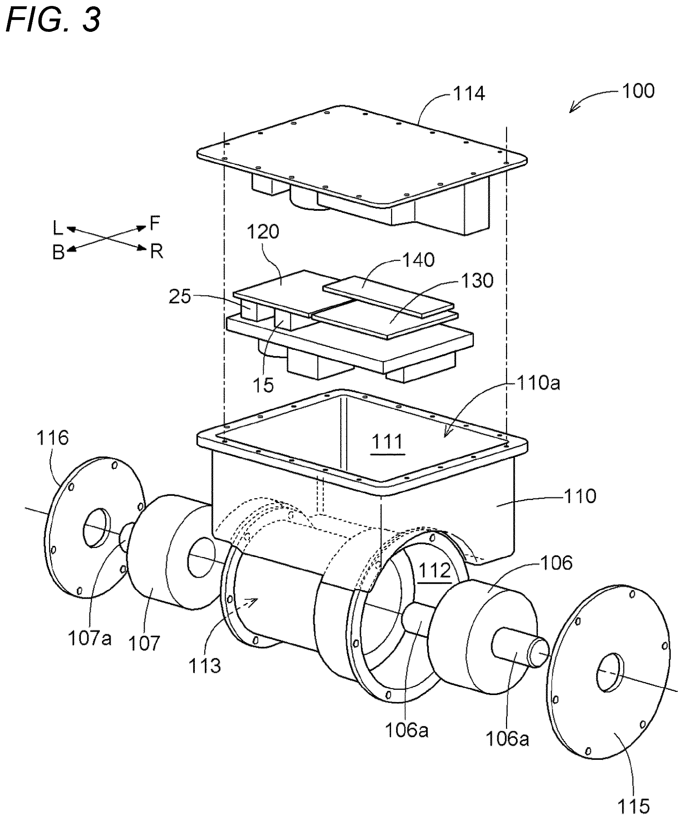

FIG. 3 illustrates a developed perspective view of the power supply module 100. In the present embodiment, as illustrated in FIG. 3, the power supply module 100 is configured in a manner that an on board charger (OBC) board 120, a motor drive board 130, and a control board 140 that controls the OBC board 120 and the motor drive board 130 are housed in a housing 110. The power supply module 100 has a first space 111. The OBC board 120, the motor drive board 130, and the control board 140 are different boards, and are housed in the first space 111 in mutually parallel postures. Hereinafter, the direction perpendicular to the plate surface of the OBC board 120 is referred to as "vertical direction", the direction along the vertical direction in which the control board 140 is viewed from the OBC board 120 and the motor drive board 130 is referred to as "upper direction", "upper side", or the like, and the direction in which the OBC board 120 and the motor drive board 130 are viewed from the control board 140 is referred to as "lower direction", "lower side", or the like.

The housing 110 has a second space 112 and a third space 113 partitioned from the first space 111. The second space 112 and the third space 113 are located on the lower side of the first space 111. A motor 106 driven by the motor drive board 130 is housed in the second space 112, and a gear mechanism 107 that decelerates and outputs the rotation of the motor 106 is housed in the third space 113. The housing 110 has an opening 110a on the upper side of the first space 111, and the OBC board 120, the motor drive board 130, and the control board 140 are housed in the first space 111 from the opening 110a. The opening 110a is closed by a lid 114, and thus the first space 111 becomes a closed space. The second space 112 houses the motor 106 from the side, and is closed by a motor cover 115 fastened with a bolt (not illustrated) to become a closed space. A motor shaft 106a extends from the motor 106 to both sides along the rotation axis, and one motor shaft 106a penetrates the motor cover 115 and is exposed to the outside of the housing 110. The other motor shaft 106a penetrates to the third space 113. The third space 113 houses the gear mechanism 107 from the side, and is closed by a gear cover 116 fastened with a bolt (not shown) to become a closed space. The other motor shaft 106a extending from the second space 112 is coupled to the gear mechanism 107, and the rotation of the motor 106 is input via the motor shaft 106a. The gear mechanism 107 decelerates the rotation of the motor 106 and outputs the decelerated rotation from a gear shaft 107a. The gear shaft 107a penetrates the gear cover 116 and is exposed to the outside of the housing 110.

At least the inverter 10 and the converter 20 are mounted on the OBC board 120. At least a drive inverter MI (see FIG. 4) that controls a drive current for driving the motor 106 is mounted on the motor drive board 130. At least the control unit 50 is mounted on the control board 140.

In the present embodiment, the OBC board 120 and the motor drive board 130 are arranged side by side in the horizontal direction. The control board 140 is disposed so as to overlap the OBC board 120 and the motor drive board 130 when viewed along the vertical direction (in vertical view). The connection between the OBC board 120 and the control board 140 and the connection between the motor drive board 130 and the control board 140 are performed via board-to-board connectors (not illustrated).

FIG. 4 illustrates a mounting position of the power supply module 100 in the vehicle 200. In the present embodiment, the power supply module 100 is provided on the front side of the central portion in the front-rear direction of the vehicle 200 and at the position of the central portion in the vehicle width direction of the vehicle 200. Here, the power supply module 100 includes a high-voltage system component HP and a low-voltage system component LP classified based on the voltage value of an applied voltage. For example, the functional unit having an applied voltage of 100 V or more is classified as the high-voltage system component HP, and the functional unit having an applied voltage of less than 100 V is classified as the low-voltage system component LP. In this case, the high-voltage system component HP includes at least the inverter 10, the first capacitor 15, the input unit 21, the first conversion unit 22, the second capacitor 25, and the drive inverter MI, and the low-voltage system component LP includes at least the second conversion unit 23 and the control unit 50.

In the power supply device 1, the low-voltage system component LP is provided on the outer edge portion side of the vehicle 200 in plan view with respect to the high-voltage system component HP. In the present embodiment, the outer edge portion side of the vehicle 200 in plan view of the vehicle 200 means, in the front-rear direction of the vehicle 200, a side away from the central portion in the front-rear direction in the front direction and in the rear direction. **In** addition, in the width direction of the vehicle 200, it means a side away from the central portion in the width direction in the left direction and in the right direction. **In** the present embodiment, for easy understanding, it is assumed that the center side and the outer edge portion side are defined only in the front-rear direction of the vehicle 200.

**In** this case, as illustrated in FIG. 4, in plan view of the vehicle 200, the second conversion unit 23 included in the low-voltage system component LP is provided on the outer edge portion side in the front-rear direction of the vehicle 200 with respect to the inverter 10, the input unit 21, and the first conversion unit 22 included in the high-voltage system component HP. Here, as illustrated in FIG. 4, in the present embodiment, the power supply module 100 is provided on the front side of the central portion in the front-rear direction of the vehicle 200 in plan view. In view of the power supply module 100, the outer edge portion of the vehicle 200 corresponds to the front side in the traveling direction, which is one of the front side in the traveling direction and the rear side in the traveling direction of the vehicle 200. Therefore, the second conversion unit 23 included in the low-voltage system component LP is provided on the front side in the traveling direction of the vehicle 200 with respect to the inverter 10, the input unit 21, and the first conversion unit 22 included in the high-voltage system component HP. As a result, even if the vehicle 200 collides, the high-voltage system component HP (for example, the inverter 10, the input unit 21, and the first conversion unit 22) is not exposed to the outside of the vehicle and can be hardly damaged.

As described above, the first capacitor 15 and the second capacitor 25 are included in the high-voltage system component HP. As a result, even if the vehicle 200 collides, the high-voltage system component HP can be hardly damaged. However, the discharge unit 14 (the resistor 16 and the resistor 26) is provided on the center side opposite to the outer edge portion side of the vehicle 200 in the power supply module 100 so that the first capacitor 15 and the second capacitor 25 can be reliably discharged even in such a case. That is, in order to reliably discharge the charges stored in the first capacitor 15 and the second capacitor 25 without damaging the resistor 16 and the resistor 26 even when the vehicle 200 collides, the first capacitor and the second capacitor are provided on the center side in the front-rear direction of the vehicle 200 in the present embodiment. As described above, the first capacitor 15 and the second capacitor 25 are provided on the center side in the traveling direction of the vehicle 200, and the resistor 16 and the resistor 26 may be provided near the first capacitor 15 and the second capacitor 25. More preferably, the resistor 16 and the resistor 26 are provided further behind the first capacitor 15 and the second capacitor 25 (on the center side in the traveling direction of the vehicle 200). Note that the positions of the resistor 16 and the resistor 26 along the vehicle width direction of the vehicle 200 are not particularly limited in the present embodiment.

In the present embodiment, the collision detection unit 70 is provided on the outer edge portion side of the vehicle 200 in the power supply module 100. As described above, the collision detection unit 70 detects whether or not the vehicle 200 has collided based on the voltage value of the voltage input to the control unit 50. In order to detect whether or not there has been a collision of the vehicle 200, the collision detection unit 70 is preferably provided in a part of the vehicle 200 that is most affected by the collision (a part that is highly likely to be damaged). Therefore, the resistor R1 and the resistor R2 constituting the collision detection unit 70 are provided on the outer edge side of the vehicle 200 (in the present embodiment, the front side along the traveling direction of the vehicle 200) in the power supply module 100. Note that the collision detection unit 70 may be provided at a further outer edge portion of the vehicle 200 (for example, the front end portion of the vehicle 200) with respect to the power supply module 100. The closer to the outer edge portion of the vehicle 200, the larger the influence of the collision, so that the collision of the vehicle 200 can be detected more reliably.

With the above configuration, the high-voltage system component HP can be hardly broken even when the vehicle 200 collides, and even if the power supply module 100 is damaged, the first capacitor 15 and second capacitor 25 with a large capacity can be discharged. Therefore, it is possible to rescue a person after discharging the first capacitor 15 and the second capacitor 25. In addition, for example, as compared with a sensor separately provided for detecting the collision of the vehicle 200, the collision detection unit 70 of the present embodiment can be configured with a simple circuit. As a result, it is possible to detect the collision of the vehicle 200 at a lower cost than a case where a separate sensor is provided.

### [Other Embodiments]

In the above embodiment, it has been described that the power supply module 100 includes the discharge unit 14. However, the power supply module 100 does not need to include the discharge unit 14.

Furthermore, in the above embodiment, it has been described that the discharge unit 14 includes the resistor 16 and the resistor 26, but this configuration is merely an example, and the discharge unit 14 may be configured using, for example, a switching element instead of the resistor 16 and the resistor 26.

Moreover, in the above embodiment, it has been described that the discharge unit 14 is provided on the center side opposite to the outer edge portion side of the vehicle 200 in the power supply module 100. However, the discharge unit 14 may be provided on the outer edge portion side of the vehicle 200.

In the above embodiment, it has been described that the power supply module 100 includes the collision detection unit 70. However, the power supply module 100 does not need to include the collision detection unit 70.

In the present embodiment, it has been described that the collision detection unit 70 is provided on the outer edge portion side of the vehicle 200 in the power supply module 100. However, the collision detection unit 70 is provided on the center side of the vehicle 200 in the power supply module 100.

In the above embodiment, it has been described that the collision detection unit 70 includes the plurality of resistors R1 and R2 connected in series between the first potential to which the output voltage of the second battery 4 is applied and the second potential lower than the first potential, and detects a collision on the basis of voltage values divided by the plurality of resistors R1 and R2. However, in the collision detection unit 70, the plurality of resistors R1 and R2 may be connected in series between the potential to which the output voltage of the first battery 3 is applied and the second potential lower than the potential, or the plurality of resistors R1 and R2 may be connected in series between the potential to which the output voltage of the first battery 3 is applied and the first potential to which the output voltage of the second battery 4 is applied. Even in this case, it is possible to detect the collision of the vehicle 200.

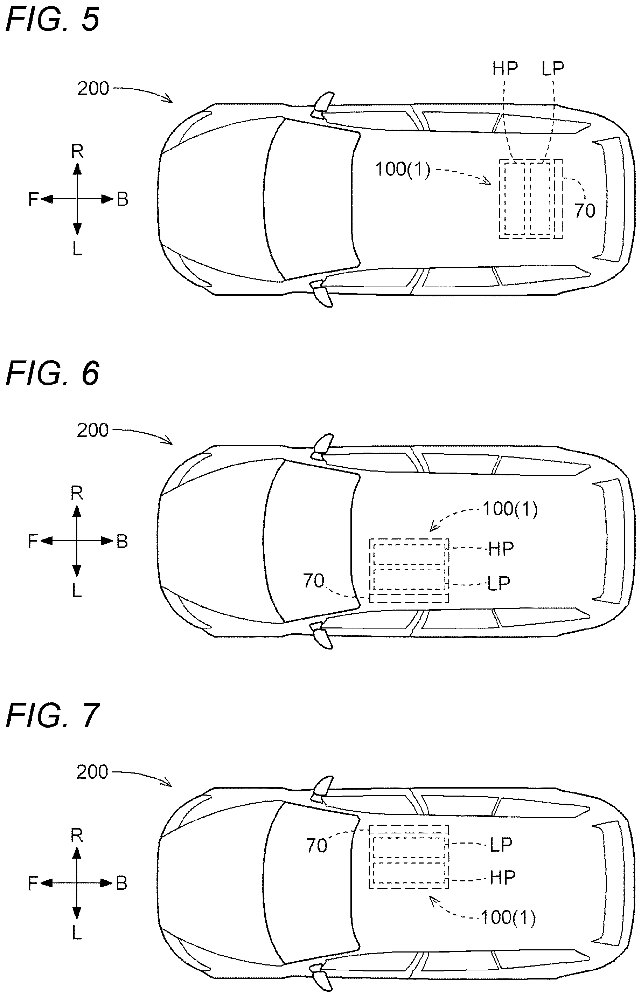

In the above embodiment, it has been described that the outer edge portion is the front side in the traveling direction of the vehicle 200. For example, as illustrated in FIG. 5, the power supply module 100 may be provided on the rear side with respect to the central portion in the front-rear direction of the vehicle 200. In this case, the outer edge portion is the rear side in the traveling direction of the vehicle 200. Therefore, the low-voltage system component LP is preferably provided on the rear side of the vehicle 200 with respect to the high-voltage system component HP.

Furthermore, for example, the outer edge portion may be one of the left side and the right side in the width direction of the vehicle 200. For example, as illustrated in FIG. 6, in a case where the power supply module 100 is provided on the left side with respect to the central portion along the vehicle width direction of the vehicle 200, the low-voltage system component LP may be provided on the left side of the vehicle 200 with respect to the high-voltage system component HP. In addition, as illustrated in FIG. 7, in a case where the power supply module 100 is provided on the right side with respect to the central portion along the vehicle width direction of the vehicle 200, the low-voltage system component LP may be provided on the right side of the vehicle 200 with respect to the high-voltage system component HP.

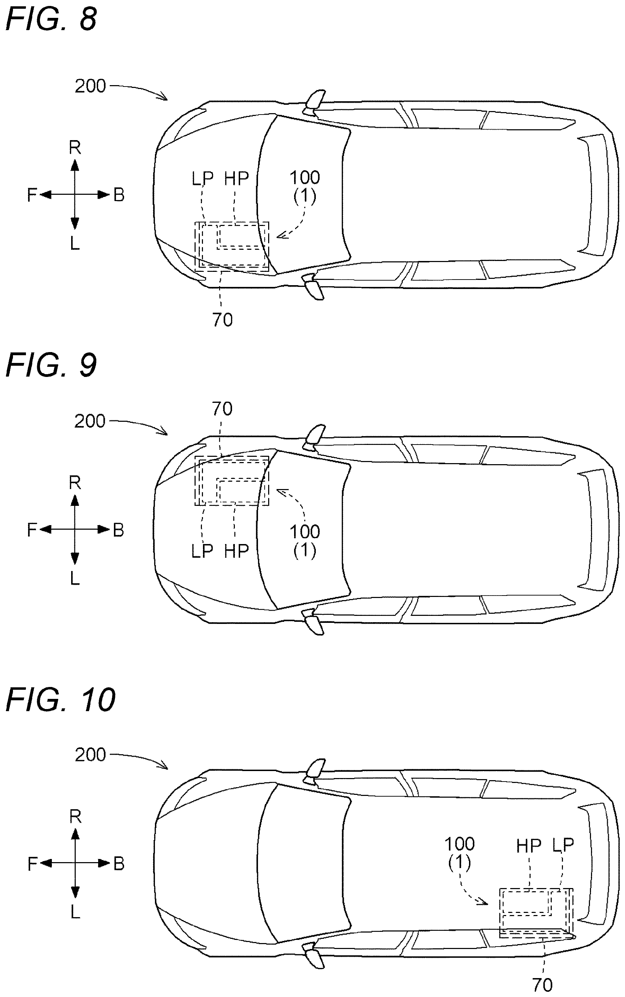

Furthermore, the outer edge portion of the vehicle 200 can be set on the basis of both the front-rear direction and the width direction of the vehicle 200. For example, as illustrated in FIG. 8, in a case where the power supply module 100 is provided in the left front portion of the vehicle 200, the low-voltage system component LP may be provided front and on the left side along the outer edge portion of the vehicle 200, and the high-voltage system component HP may be provided on the center side (central side) of the vehicle 200 with respect to the low-voltage system component LP. For example, as illustrated in FIG. 9, in a case where the power supply module 100 is provided in the right front portion of the vehicle 200, the low-voltage system component LP may be provided front and on the right side along the outer edge portion of the vehicle 200, and the high-voltage system component HP may be provided on the center side (central side) of the vehicle 200 with respect to the low-voltage system component LP.

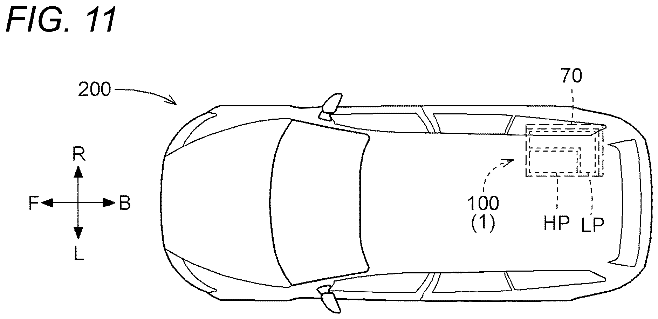

Furthermore, as illustrated in FIG. 10, in a case where the power supply module 100 is provided in the left rear portion of the vehicle 200, the low-voltage system component LP may be provided rear and on the left side along the outer edge portion of the vehicle 200, and the high-voltage system component HP may be provided on the center side (central side) of the vehicle 200 with respect to the low-voltage system component LP. Moreover, as illustrated in FIG. 11, in a case where the power supply module 100 is provided in the right rear portion of the vehicle 200, the low-voltage system component LP may be provided rear and on the right side along the outer edge portion of the vehicle 200, and the high-voltage system component HP may be provided on the center side (central side) of the vehicle 200 with respect to the low-voltage system component LP.

### [Outline of Embodiment]

Hereinafter, the outline of the power supply device 1 described above will be described.

(1) A characteristic configuration of the power supply device 1 according to the present invention is the power supply device 1 mounted on the vehicle 200, the power supply device includes the power supply module 100, the power supply module includes the inverter 10 that converts AC power into DC power and outputs the DC power, the converter 20 including the first conversion unit 22 that converts the DC power from the inverter 10 into DC power composed of a DC voltage having a first voltage value chargeable the first battery 3, and the second conversion unit 23 that converts the DC power into DC power composed of a DC voltage having a second voltage value lower than the first voltage value chargeable the second battery 4 different from the first battery 3, and the control unit 50 that drives the inverter 10 and drives the converter 20, the power supply module 100 includes the high-voltage system component HP including the inverter 10 and the first conversion unit 22 and the low-voltage system component LP including the second conversion unit 23 based on a voltage value of a voltage to be applied, and the low-voltage system component LP is provided on an outer edge portion side of the vehicle 200 in plan view with respect to the high-voltage system component HP.
   For example, in a case where the vehicle 200 collides, the outer edge portion side of the vehicle 200 is often more damaged than the central portion side of the vehicle. In addition, when the functional units of the power supply module 100 are classified into the high-voltage system component HP and the low-voltage system component LP, the high-voltage system component HP has a higher voltage value of the applied voltage than the low-voltage system component LP. Therefore, according to the above characteristic configuration, the low-voltage system component LP can be disposed on the outer edge portion side of the vehicle 200 and the high-voltage system component HP can be disposed on the central portion side of the vehicle 200, and thus even if the vehicle 200 collides, the high-voltage system component HP having a high voltage value of the applied voltage can be prevented from being exposed to the outside of the vehicle. Furthermore, since the low-voltage system component LP and the high-voltage system component HP are arranged separately from each other, the influence of noise from one of the high-voltage system component HP and the low-voltage system component LP to the other can be reduced.
(2) In the power supply device 1 according to (1), preferably, the power supply module 100 further includes the first capacitor 15 provided between output terminals of the inverter 10, the second capacitor 25 provided between output terminals of the first conversion unit 22, and the discharge unit 14 that discharges the first capacitor 15 and the second capacitor 25, and the discharge unit 14 is provided on a center side opposite to the outer edge portion side of the vehicle 200 in the power supply module 100.
   According to this configuration, since the discharge unit 14 can be disposed at a part hardly damaged when the vehicle 200 collides, the first capacitor 15 and the second capacitor 25 can be discharged even when the vehicle 200 collides. Therefore, it is possible to rescue a person or collect the vehicle in a state where the first capacitor 15 and the second capacitor 25 are discharged.
(3) In the power supply device 1 according to (1), preferably, the power supply module 100 further includes the collision detection unit 70 that detects a collision of the vehicle 200, and the collision detection unit 70 is provided on the outer edge portion side of the vehicle 200 in the power supply module 100.
   According to this configuration, the collision detection unit 70 can be disposed at a part easily damaged when the vehicle 200 collides. Therefore, the collision of the vehicle 200 can be detected based on the damage of the collision detection unit 70.
(4) In the power supply device 1 according to (3), preferably, the collision detection unit 70 includes a plurality of resistors R1, R2 connected in series between a first potential to which an output voltage of the second battery 4 is applied and a second potential lower than the first potential, and detects the collision based on a voltage value divided by the plurality of resistors R1, R2.
   According to this configuration, for example, the voltage value divided due to the disconnection or short-circuit in the collision detection unit 70 caused by a collision can be made different from a voltage value before collision. Therefore, it is possible to easily detect the collision of the vehicle 200.
(5) In the power supply device 1 according to (1) to (4), the outer edge portion is preferably one of a front side in a traveling direction and a rear side in the traveling direction of the vehicle 200.

According to this configuration, the arrangement of the high-voltage system component HP and the low-voltage system component LP can be easily set based on the installation place of the power supply module 100 in the vehicle 200.

### INDUSTRIAL APPLICABILITY

The present invention can be used for a power supply device mounted on a vehicle.

### REFERENCE SIGNS LIST

1: Power supply device, 3: First battery, 4: Second battery, 10: Inverter, 14: Discharge unit, 15: First capacitor, 20: Converter, 22: First conversion unit, 23: Second conversion unit, 25: Second capacitor, 50: Control unit, 70: Collision detection unit, 100: Power supply module, 200: Vehicle, HP: High-voltage system component, LP: Low-voltage system component, R1: Resistor, and R2: Resistor

## Claims

1. A power supply device mounted on a vehicle, the power supply device comprising a power supply module,
the power supply module includes
an inverter that converts AC power into DC power and outputs the DC power,
a converter including a first conversion unit that converts the DC power from the inverter into DC power composed of a DC voltage having a first voltage value chargeable a first battery, and a second conversion unit that converts the DC power into DC power composed of a DC voltage having a second voltage value lower than the first voltage value chargeable a second battery different from the first battery, and
a control unit that drives the inverter and drives the converter,
wherein the power supply module includes a high-voltage system component including the inverter and the first conversion unit and a low-voltage system component including the second conversion unit based on a voltage value of a voltage to be applied, and the low-voltage system component is provided on an outer edge portion side of the vehicle in plan view with respect to the high-voltage system component.

2. The power supply device according to claim 1, wherein the power supply module further includes a first capacitor provided between output terminals of the inverter, a second capacitor provided between output terminals of the first conversion unit, and a discharge unit that discharges the first capacitor and the second capacitor, and
the discharge unit is provided on a center side opposite to the outer edge portion side of the vehicle in the power supply module.

3. The power supply device according to claim 1, wherein the power supply module further includes a collision detection unit that detects a collision of the vehicle, and
the collision detection unit is provided on the outer edge portion side of the vehicle in the power supply module.

4. The power supply device according to claim 3, wherein the collision detection unit includes a plurality of resistors connected in series between a first potential to which an output voltage of the second battery is applied and a second potential lower than the first potential, and detects the collision based on a voltage value divided by the plurality of resistors.

5. The power supply device according to any one of claims 1 to 4, wherein the outer edge portion is one of a front side in a traveling direction and a rear side in the traveling direction of the vehicle.
